# EUROPÄISCHE PATENTSCHRIFT

(11) **EP 1 447 576 B1**
(45) Veröffentlichungstag und Bekanntmachung des Hinweises auf die Patenterteilung: **26.10.2005**
(21) Anmeldenummer: 04002892.0
(22) Anmeldetag: 10.02.2004
(51) Int. Cl.: F16B 37/04

(54) **Kunststoffmutter zur Aufnahme an einem einen Durchbruch aufweisenden Bauteil**
Plastic nut for a construction unit exhibiting a break-through
Ecrou en plastique pour une unité de construction montrant une percée

(30) Priorität: 11.02.2003 DE 10305610
(43) Veröffentlichungstag der Anmeldung: 18.08.2004
(73) Patentinhaber: EJOT GmbH & Co. KG, 57334 Bad Laasphe (DE)
(72) Erfinder: Behle, Jürgen, 57334 Bad Laasphe (DE); König, Gottfried, Dr., 57334 Bad Laasphe (DE); Welik, Günter, 57334 Bad Laasphe (DE)
(74) Vertreter: Bardehle, Heinz

(56) Entgegenhaltungen:
- DE-A- 19 728 988
- US-A- 3 343 441

## Beschreibung

Die Erfindung bezieht sich auf eine Kunststoffmutter zur Aufnahme an einem einen Durchbruch aufweisenden Bauteil, die mit einem ein Aufnahmeloch für eine Schraube dienenden Mutterstück in den Durchbruch einsteckbar ist und zur Anlage an der einen Seite des Bauteils mit einem Flansch und zur Anlage an der anderen Seite des Bauteils mit die Kunststoffmutter am Bauteil sichernden zwei gegenüberliegenden Schnapphaken versehen ist, die in entspannter Lage einerseits in ihrer radialen Ausdehnung dem Innenmaß des Durchbruchs entsprechen, andererseits das Aufnahmeloch überdecken und beim Einsetzen der Schraube ausspreizen und sich dem Bauteil gegenüberstellen.

Eine derartige Kunststoffmutter ist in der deutschen Offenlegungsschrift DE 197 28 988 A1, Figuren 16a bis d, dargestellt und beschrieben.

Es ist weiterhin aus der US PS 3343 441 eine Kunststoffmutter bekannt, die zum Einsatz in eine Platte dient und mit zwei Paaren von jeweils zwei gegenüberliegenden Schnapphaken versehen ist. Diese Schnapphaken sind an ihren Enden abbiegbar gestaltet, so dass sich beim Anziehen einer in die Kunststoffmutter eingedrehten Schraube je nach Dicke der betreffenden Platte die Enden der Schnapphaken verbiegen, und zwar jeweils soweit, wie dies die Dicke der Platte erfordert. Diese Abbiegbarkeit der Schnapphaken gibt der Kunststoffmutter eine gewisse, in vielen Fällen unerwünschte Elastizität gegenüber einer seitlichen Beanspruchung eines an der Platte anzuschraubenden weiteren Bauteils, da die für die Sicherung der Kunststoffmutter an der Platte vorgesehenen Schnapphaken wegen der notwendigen Abbiegbarkeit ihrer Enden entsprechend flexibel sind, was sich auf die gesamte Kunststoffmutter überträgt.

Der Erfindung liegt die Aufgabe zugrunde, die vorstehend erläuterte Kunststoffmutter so zu gestalten, dass durch Anziehen der in das Mutterstück eingedrehten Schraube die Kunststoffmutter beidseitig in Bezug auf das Bauteil derart fest zur Anlage gebracht wird, dass sich dabei der Abstand zwischen Flansch und Schnapphaken ohne deren Schwächung auf die Dicke des Bauteils verringert und damit die Kunststoffmutter an Bauteilen unterschiedlicher Dicke angebracht werden kann.

Die erfindungsgemäße Lösung besteht darin, dass seitlich neben den zwei gegenüberliegenden Schnapphaken zwei parallele in Ausspreizrichtung verlaufende Wände angeordnet sind, die sich vom Flansch zum Mutterstück erstrecken und eine in ihrem mittleren Bereich und in Ausspreizrichtung verlaufende derartige Schwächung ihrer Wandstärke besitzen, dass beim Anziehen der Schraube durch Knicken der Wände an der Schwächung sich der Flansch und die Schnapphaken beidseitig an dem Bauteil anlegen.

Durch die ausknickbaren Wände ergibt sich beim Anziehen der Schraube eine Annäherung der Schnapphaken an das Bauteil, bis schließlich einerseits der Flansch an der einen Seite des Bauteils und die Schnapphaken an der anderen Seite des Bauteils anliegen, womit der Kunststoffmutter in Bezug auf das Bauteil durch die stabilen Schnapphaken eine definierte Lage gegeben wird. Dies ist insbesondere für den Fall wichtig, dass mit der Schraube an der Kunststoffmutter ein weiteres Bauelement anzubringen ist, das dann ebenfalls eine definierte Lage zu dem Bauteil besitzt und beibehält. Bei diesem Anziehen der Schraube ermöglicht das Knicken der Wände an deren Schwächung eine Anpassung der Kunststoffmutter an verschiedene Dicken eines beispielsweise durch eine Platte gegebenen Bauteils, wobei diese Knickung umso stärker ausfällt, je dünner das betreffende Bauteil ist. Dabei lässt sich durch die Knickung der Wände zusätzlich der erzielen, durch die bei der Knickung gewissermaßen zusammengefalteten Teile der Wände eine Ausrichtung der Lage des Mutterstücks in Bezug auf die Schnapphaken bzw. den Flansch zu bewirken, wodurch den geknickten Wänden eine zusätzliche Funktion zukommt.

Einerseits kann man die Schwächung der Wände auf deren den Schnapphaken zugewandte Seite anordnen. In diesem Falle knicken die Wände nach außen aus, also von den Schnapphaken weg, wobei sich die Schwächung von den Schnapphaken entfernt. Die auswärts geknickten Wandteile geben dem die Schraube aufnehmenden Mutterstück bei deren Verdrehung einen zusätzlichen Widerstand, so dass die innere Stabilität der Kunststoffmutter, durch erschwerte Verdrehbarkeit des Mutterstücks gegenüber dem Flansch erheblich vergrößert wird.

Andererseits ist es auch möglich, die Schwächung der Wände so zu legen, dass diese auf deren den Schnapphaken abgewandten Seite angeordnet ist. In diesem Falle knicken die Wände nach innen aus, also in Richtung auf die Schnapphaken und legen sich an diese an, so dass bei dieser Gestaltung den Schnapphaken und dem Mutterstück eine Zentrierung gegenüber dem Flansch gegeben wird.

Die Schwächung der Wände kann man jeweils einzeln als auch mehrfach in den Wänden vorsehen. Im letzteren Falle gestaltet man die Wände derart, dass die Wände jeweils mehrere Schwächungen aufweisen, die abwechselnd auf der den Schnapphaken zugewandten und abgewandten Seite angeordnet sind. Beim Anziehen der Schraube ergibt sich damit eine mäanderförmige Knickung in den Wänden, wodurch ein besonders großer Bereich der Unterschiedlichkeit des Abstands zwischen Flansch und Schnapphaken einerseits und Dicke des Bauteils andererseits überbrückt werden kann.

Das Mutterstück gestaltet man zweckmäßig so, dass das Aufnahmeloch für die Schraube im Bereich der Wände und im Bereich des Mutterstücks als Gewindeloch ausgebildet ist. Hierdurch lassen sich beim Einführen einer Schraube die beiden Schnapphaken entgegen ihrer Federspannung relativ leicht nach außen wegdrücken, bis dann die Schraube im Bereich des Mutterstücks auf das Gewindeloch auftrifft und sich in diesem Bereich sein Gewinde beim Weiterdrehen der Schraube ausfurcht.

Das Gewindeloch kann dabei als beidseitig offenes Loch oder auch als Sackloch ausgebildet sein. Im letzteren Falle kann dies aus Gründen der Erzielung einer besonderen Abdichtung zweckmäßig sein.

In den Figuren sind Ausführungsbeispiele der Erfindung dargestellt. Es zeigen:
- Figur 1: einen Schnitt durch die Kunststoffmutter, der durch die Schnapphaken in Axialrichtung der Kunststoffmutter verläuft, und zwar beim Einführen in den Durchbruch eines Bauteils;
- Figur 2: die gleiche Kunststoffmutter in einer Position vollständig durch den Durchbruch hindurchgeführt;
- Figur 3: die Kunststoffmutter in der Position gemäß Figur 2 mit eingedrehter Schraube, wobei die Schnapphaken ausgespreizt sind, aber noch nicht an dem Bauteil anliegen.
- Figur 4a: die Kunststoffmutter gemäß Figur 2 um 90° gedreht, wobei der Schnitt durch die Wände verläuft, an deren Innenseite die Schwächung angeordnet ist;
- Figur 4b: die Kunststoffmutter gemäß Figur 4a mit nach außen geknickten Wänden bei fest angezogener Schraube;
- Figur 5a: eine Kunststoffmutter ähnlich derjenigen gemäß Figur 4a, jedoch mit an der Außenseite der Wände angeordneter Schwächung;
- Figur 5b: die Kunststoffmutter gemäß Figur 5a mit nach innen eingeknickten Wänden bei angezogener Schraube;
- Figur 6: einen Schnitt längs der Linie VI-VI aus Figur 2;
- Figur 7a: eine Kunststoffmutter mit zwei aufeinanderfolgenden Schwächungen in jeder Wand, die abwechselnd auf der den Schnapphaken zugewandten und abgewandten Seite liegen;
- Figur 7b: die Kunststoffmutter gemäß Figur 7a mit nach innen und außen mäanderförmig abgeknickten Wänden bei angezogener Schraube.

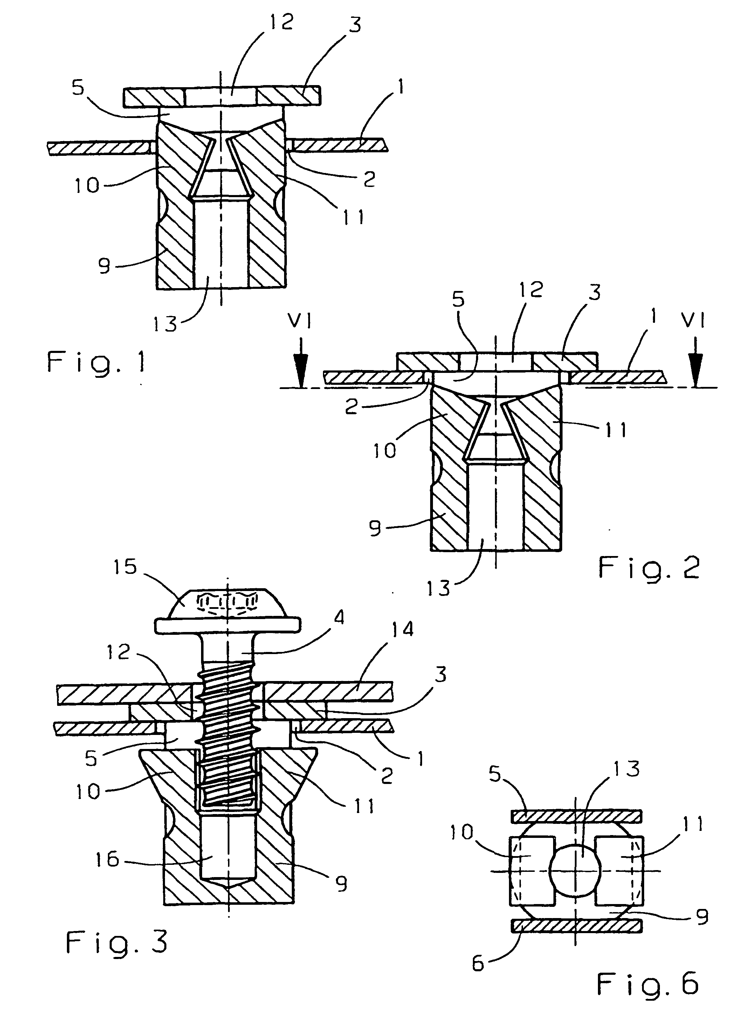

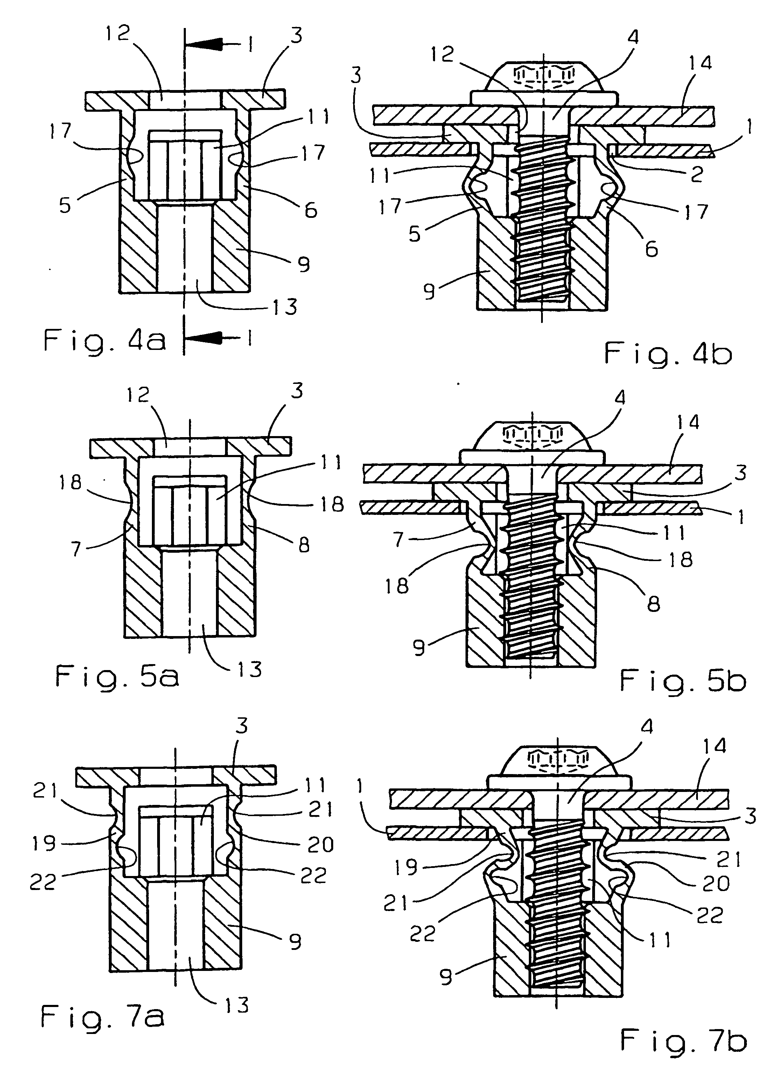

In der Figur 1 ist die Kunststoffmutter im Schnitt längs der Linie I-I aus Figur 4a dargestellt, die in das Bauteil 1 eingesetzt ist, das dafür den Durchbruch 2 aufweist. Die Kunststoffmutter besitzt den Flansch 3, der zur Anlage an dem Bauteil 1 bestimmt ist, wenn die Kunststoffmutter vollständig in das Bauteil 1 eingesetzt ist (siehe Figur 2). Der Flansch 3 ist über die aus den Figuren 4 und 5 ersichtlichen Wände 5 und 6 bzw. 7 und 8 mit dem Mutterstück 9 verbunden, aus dem in Richtung auf den Flansch 3 die beiden Schnapphaken 10 und 11 herauswachsen, die gemäß der Darstellung in Figur 1 in ihrer entspannten Lage gezeigt sind, in der sie in dem Durchbruch 2 des Bauteils 1 hindurchgeschoben werden können. Wegen der einander nach innen zugewandten Lage der Schnapphaken 10 und 11 behindern diese dabei das Hindurchführen der Kunststoffmutter durch den Durchbruch 2 nicht, so dass bei vollständigem Hindurchführen der Kunststoffmutter diese die in der Figur 2 dargestellte Lage erreicht, in der der Flansch 3 zur Anlage an dem Bauteil 1 kommt. Die Kunststoffmutter weist zur Aufnahme einer Schraube 4 (siehe Figur 3) auf der Seite des Flansches 3 das Durchgangsloch 12 und auf der Seite des Mutterstücks 9 das Gewindeloch 13 auf. Eine einzudrehende Schraube 4 lässt sich gemäß Figur 3 mit ihrem Gewindeteil durch das Durchgangsloch 12 hindurchschieben, bis der Gewindeanfang auf das Gewindeloch 13 trifft, von wo aus dann die Schraube 4 vorzugsweise unter Furchen eines Gewindes eingedreht werden kann.

Figur 3 zeigt die durch den Durchbruch 2 vollständig hindurchgeschobene Schraube 4, die bei ihrem Eindrehen in das Mutterstück 9 die beiden Schnapphaken 10 und 11 nach außen weggedrückt hat, die sich so mit ihren dem Flansch 3 zugewandten Flächen an das Bauteil 1 anlegen. Gemäß der Darstellung in Figur 3 dient die Kunststoffmutter mit der in sie eingedrehten Schraube 4 dazu, an dem Bauteil 1 das weitere Bauelement 14 zu befestigen, das beim Anziehen der Schraube 4 von deren Kopf 15 an den Flansch 3 angedrückt wird.

Das Mutterstück 9 gemäß Figur 3 weist gegenüber den Figuren 1 und 2 noch die Besonderheit auf, dass es sich bei dem Schraubenloch 16 gemäß Figur 3 um ein Sackloch handelt.

Wie in den Figuren 4a und b dargestellt, werden bei dem vorstehend beschriebenen Anziehen der Schraube 4 die beiden Wände 5 und 6 geknickt, und zwar wegen ihrer in ihrem mittleren Bereich und auf der den Schnapphaken 10, 11 zugewandten Seite angeordneten Schwächung 17 (siehe Figur 4a) nach außen hin, wie es in der Figur 4b dargestellt ist. Aufgrund dieser Gestaltung der Kunststoffmutter hat diese beim Anziehen der Schraube 4 einen Toleranzbereich überschritten, der durch die Knickung der Wände 5 und 6 bestimmt ist und der sich deutlich aus einem Vergleich der Figuren 4a und 4b ergibt. Dieser Toleranzbereich entspricht dem Unterschied zwischen dem Abstand von Flansch 3 zu den Schnapphaken 10 und 11 gegenüber der Dicke des Bauteils 1.

Bei der Darstellung gemäß den Figuren 5a und 5b handelt es sich um eine Abwandlung gegenüber den Figuren 4a und 4b. Gemäß den Figuren 5a und 5b sind nämlich die Wände 7 und 8 mit einer Schwächung 18 in ihrem mittleren Bereich versehen, aufgrund deren dessen die Wände 7 und 8 nach innen, also in Richtung auf die Schnapphaken 10, 11 knicken, wie dies in Figur 5b dargestellt ist.

Die durch die Lage der Schwächung 17 bzw. 18 bestimmte Knickrichtung ist dadurch zu erklären, dass sich neben der Schwächung, also in dem entsprechend dünnen Teil der Wände 5, 6 bzw. 7, 8 eine erhebliche Druckkonzentration beim Anziehen der Schraube 4 ergibt, so dass die in dem Material der Wände verlaufenden Drucklinien entweder nach der einen Seite oder nach der anderen Seite der Wände zusammenlaufen und sich dort konzentrieren, womit dem Druck jeweils eine entsprechend diesem Druck verlaufende Schrägrichtung und damit Knickrichtung gegeben ist.

Bei den Figuren 7a und 7b handelt es sich um eine Kunststoffmutter, bei der die Wände 19, 20 jeweils zwei Schwächungen 21 und 22 aufweisen, von denen die Schwächungen 21 auf der den Schnapphaken 10, 11 abgewandten Seite und die Schwächungen 22 auf der den Schnapphaken 10, 11 zugewandten Seite angeordnet sind. Bei Eindrehen der Schraube 4 ergibt sich daher eine mäanderförmige Knickung der Wände 19 und 20, wodurch ein entsprechend großer Toleranzbereich mit dieser Kunststoffmutter überbrückt werden kann.

## Patentansprüche

1. Kunststoffmutter zur Aufnahme an einem einen Durchbruch (2) aufweisenden Bauteil (1), die mit einem ein Aufnahmeloch (12, 13) für eine Schraube (4) aufweisenden Mutterstück (9) in den Durchbruch (2) einsteckbar ist und zur Anlage an der einen Seite des Bauteils (1) mit einem Flansch (3) und zur Anlage an der anderen Seite des Bauteils (1) mit die Kunststoffmutter am Bauteil (1) sichernden, zwei gegenüberliegenden Schnapphaken (10, 11) versehen ist, die in entspannter Lage einerseits in ihrer radialen Ausdehnung dem Innenmaß des Durchbruchs (2) entsprechen, andererseits das Aufnahmeloch (12, 13) überdecken und beim Einsetzen der Schraube (4) ausspreizen und sich dem Bauteil (1) gegenüberstellen, **dadurch gekennzeichnet, dass** seitlich neben den zwei Schnapphaken (10, 11) zwei parallel in Ausspreizrichtung verlaufende Wände (5, 6, 7, 8; 19, 20) angeordnet sind, die sich vom Flansch (3) zum Mutterstück (9) erstrecken und in ihrem mittleren Bereich und in Ausspreizrichtung verlaufende derartige Schwächungen (17, 18; 21, 22) ihrer Wandstärke besitzen, dass beim Anziehen der Schraube (4) durch Knicken der Wände (5, 6, 7, 8; 19, 20) an den Schwächungen (17, 18; 21, 22) sich der Flansch (3) und die Schnapphaken (10, 11) beidseitig an dem Bauteil (1) anlegen.

2. Kunststoffmutter nach Anspruch 1, **dadurch gekennzeichnet, dass** die Schwächung (17) der Wände (5, 6) auf deren den Schnapphaken (10, 11) zugewandten Seite angeordnet ist.

3. Kunststoffmutter nach Anspruch 1, **dadurch gekennzeichnet, dass** die Schwächung (18) der Wände (7, 8) auf deren den Schnapphaken (10, 11) abgewandten Seite angeordnet ist.

4. Kunststoffmutter nach Anspruch 1, **dadurch gekennzeichnet, dass** die Wände (19, 20) jeweils mehrere Schwächungen (21, 22) aufweisen, die abwechselnd auf der den Schnapphaken (10, 11) abgewandten und zugewandten Seite angeordnet sind.

5. Kunststoffmutter nach einem der Ansprüche 1 bis 4, **dadurch gekennzeichnet, dass** das Aufnahmeloch für die Schraube (4) im Bereich der Wände (5, 6; 7, 8; 19, 20) als Durchgangsloch (12) und im Bereich des Mutterstücks (9) als Gewindeloch (13) ausgebildet ist.

6. Kunststoffmutter nach Anspruch 5, **dadurch gekennzeichnet, dass** das Gewindeloch (13) als Sackloch (16) ausgebildet ist.

## Claims

1. Plastic nut to be mounted on a component (1) having an opening (2), wherein the plastic nut can be inserted into the opening (2) by means of a nut part (9) having an insertion hole (12, 13) for a bolt (4) and is provided in order to bear against one side of the component (1) with a flange (3) and in order to bear against the other side of the component (1) with two opposing snap hooks (10, 11) securing the plastic nut to the component (1), wherein the snap hooks, when in the relaxed position, on the one hand, correspond in terms of their radial extent to the internal dimensions of the opening (2) and, on the other hand, cover the insertion hole (12, 13) and, when the bolt (4) is inserted, expand and position themselves opposite the component (1), **characterised in that** two walls (5, 6, 7, 8; 19, 20) extending in parallel in the direction of expansion are arranged laterally alongside the two snap hooks (10, 11), extend from the flange (3) to the nut part (9) and are provided with reductions (17, 18; 21. 22) in their wall thickness extending in their central region and in the direction of expansion, such that the flange (3) and the snap hooks (10, 11) bear against the component (1) on either side when the bolt (4) is tightened as a result of bending of the walls (5, 6, 7, 8; 19, 20) at the reductions (17, 18; 21, 22) in thickness.

2. Plastic nut according to claim 1, **characterised in that** the reduction (17) in thickness of the walls (5, 6) is arranged on their side directed towards the snap hooks (10, 11).

3. Plastic nut according to claim 1, **characterised in that** the reduction (18) in thickness of the walls (7, 8) is arranged on their side directed away from the snap hooks (10, 11).

4. Plastic nut according to claim 1, **characterised in that** the walls (19, 20) each have a plurality of reductions (21, 22) in thickness arranged alternately on the sides directed away from and towards the snap hooks (10, 11).

5. Plastic nut according to one of claims 1 to 4, **characterised in that** the insertion hole for the bolt (4) is in the form of a through hole (12) in the region of the walls (5, 6; 7, 8; 19, 20) and in the form of a threaded hole (13) in the region of the nut part (9).

6. Plastic nut according to claim 5, **characterised in that** the threaded hole (13) is in the form of a blind hole (16).

## Revendications

1. Ecrou en matière plastique destiné à être fixé sur un composant (1) comportant une percée (2), lequel peut être inséré dans la percée (2) avec un élément d'écrou (9) comportant un trou de réception (12, 13) pour une vis (4), qui est pourvu d'une bride (3) pour la mise en appui contre une face du composant (1) et, pour la mise en appui contre l'autre face du composant (1), de deux crochets de blocage (10, 11) opposés bloquant l'écrou en matière plastique sur le composant (1) qui, à l'état détendu, d'une part correspondent dans leur extension radiale à la cote intérieure de la percée (2), d'autre part recouvrent le trou de réception (12, 13), et qui, lors de l'insertion de la vis (4), s'écartent et se positionnent en face du composant (1), **caractérisé en ce que**, latéralement aux deux crochets de blocage (10, 11) sont disposées deux parois (5, 6, 7, 8 ; 19, 20) s'étendant parallèlement dans le sens de l'écartement, qui s'étendent de la bride (3) vers l'élément d'écrou (9), et possèdent dans leur zone centre des réductions (17, 18 ; 21, 22) de leur épaisseur de paroi et s'étendant dans le sens de l'écartement telles que, lors du serrage de la vis (4), la bride (3) et les crochets de blocage (10, 11) s'appliquent de part et d'autre contre le composant (1) moyennant l'infléchissement des parois (5, 6, 7, 8 ; 19, 20) au niveau des réductions (17, 18 ; 21, 22).

2. Ecrou en matière plastique selon la revendication 1, **caractérisé en ce que** la réduction (17) des parois (5, 6) est agencée sur leur face orientée vers les crochets de blocage (10, 11).

3. Ecrou en matière plastique selon la revendication 1, **caractérisé en ce que** la réduction (18) des parois (7, 8) est agencée sur leur face opposée aux crochets de blocage (10, 11).

4. Ecrou en matière plastique selon la revendication 1, **caractérisé en ce que** les parois (19, 20) comportent respectivement plusieurs réductions (21, 22), qui sont agencées en alternance sur la face opposée aux crochets de blocage (10, 11) et sur la face orientée vers ceux-ci.

5. Ecrou en matière plastique selon l'une quelconque des revendications 1 à 4, **caractérisé en ce que** le trou de réception pour la vis (4) est réalisé sous la forme d'un trou de passage (12) dans la zone des parois (5, 6 ; 7, 8 ; 19, 20), et sous la forme d'un trou taraudé (13) dans la zone de l'élément d'écrou (9).

6. Ecrou en matière plastique selon la revendication 5, **caractérisé en ce que** le trou taraudé (13) est réalisé sous la forme d'un trou borgne (16).
